# EUROPEAN PATENT SPECIFICATION

(11) **EP 4 514 678 B1**
(45) Date of publication and mention of the grant of the patent: **04.03.2026**
(21) Application number: 23721848.2
(22) Date of filing: 21.04.2023
(51) Int. Cl.: B62J 27/00, B62J 45/40, B62K 5/027, B62K 5/10, B62K 5/08

(54) **THREE-WHEELED MOTORCYCLE WITH A RADAR DEVICE PLACED BETWEEN THE FRONT WHEELS**
DREIRÄDRIGES MOTORRAD MIT EINEM ZWISCHEN DEN VORDERRÄDERN ANGEBRACHTEN RADARGERÄT
MOTOCYCLE À TROIS ROUES ÉQUIPÉ D'UN RADAR PLACÉ ENTRE LES ROUES AVANT

(30) Priority: 29.04.2022 IT 202200008591
(43) Date of publication of application: 05.03.2025
(73) Proprietor: Piaggio & C. S.P.A., 56025 Pontedera Pisa (IT)
(72) Inventor: DI TANNA, Onorino, 56025 Pontedera (PI) (IT)
(74) Representative: Savi, Massimiliano
(86) International application number: PCT/EP2023/060426
(87) International publication number: WO 2023/208764

(56) References cited:
- WO-A1-2019/180941
- JP-A- 2020 164 100
- US-B2- 7 967 306

## Description

### FIELD OF THE INVENTION

The present invention falls within the scope of manufacturing saddle-ride motorcycles, in particular three-wheeled. In particular, the invention relates to a three-wheeled motorcycle provided with a radar device arranged between the front wheels, considering the motorcycle from a frontal observation point.

### PRIOR ART

Over the last few years, the demand for three-wheeled motorcycles in which two front wheels are steered and one rear wheel is driven has increased. In these vehicles, the two front wheels are connected to the vehicle frame so as to be tilting laterally, following a rolling movement around an axis oriented according to the direction of travel.

In a three-wheeled motorcycle, an articulated quadrilateral mechanism is provided between the two front wheels and a front part of the frame to allow for roll of the front wheels. Typically, the articulated quadrilateral mechanism comprises a pair of cross members, each of which is hinged to the frame at the centreline longitudinal plane, so as to oscillate around mutually parallel axes. The quadrilateral also comprises a pair of uprights for each of which the two ends are hinged to a corresponding one of the two cross members, defining rotation axes parallel to those of the cross members with respect to the frame. The two uprights are connected, directly or indirectly, to the wheels so as to allow them to steer. The steering movement is controlled by a steering system which is operationally independent of the quadrilateral mechanism.

In a three-wheeled motorcycle, a suspension assembly is also provided which includes, for each front wheel, a suspension interposed between the wheel itself and the corresponding upright of the quadrilateral. For each front wheel, said suspension comprises at least one shock absorber which allows the up and down movement of the corresponding front wheel with respect to the quadrilateral.

The front part of the motorcycle normally provides for the installation of a protection shield which defines the aerodynamics of the motorcycle. In almost all cases, the shield is connected, directly or indirectly, to the motorcycle frame in order to follow the rolling movements thereof. In more recent solutions, the shield is connected to one of the two cross members so as to be released from the rolling movement: in this case, the shield does not change its orientation with respect to the ground.

In many three-wheeled motorcycles a radar device is also installed in the front part, typically on the shield in a substantially central position with respect to a front observation point of the motorcycle. The radar device is connected, directly or indirectly, to a motorcycle control unit to signal to the rider that he/she is approaching another motorcycle or an obstacle in general.

However, the installation of the radar device on the shield is accompanied by some drawbacks, the main of which can be identified in its difficult design, in particular in defining its shape. The conformation of the shield must be as advantageous as possible in terms of aerodynamic effect. To obtain this effect, the surfaces of the shield must be contained and in any case shaped so as to reduce friction with the air. The space available for installing the radar device is therefore very limited, also in view of the unavoidable need to install the headlights on the shield to illuminate the roadway while the motorcycle is in motion.

It is evident that in view of the limited space available for the installation of the radar device, the dimensions of the latter must necessarily be limited. On the one hand, this aspect is negative in terms of the overall performance of the device. On the other hand, the small dimensions make installation and/or inspection of the device more difficult.

Patent document JP2020164100A illustrates an example of front two-wheel swing tricycle, adapted to reduce an operating load of a driver during operation of an automatic brake and discloses a saddle-ride type motorcycle according to the preamble of claim 1.

Patent document US7967306 illustrates another example of a three-wheeled vehicle provided with a tilting mechanism allowing leaning characteristics similar to those of a two-wheeled vehicle.

Patent document WO2019180941 illustrates an example of a two-wheeled straddle-type vehicle having a forward detection function.

### SUMMARY

The main task of the present invention is to provide a three-wheeled motorcycle which allows the drawbacks indicated above to be solved or at least mitigated. Within the scope of this task, a first object of the present invention is to provide a three-wheeled motorcycle provided with a radar device placed in a position which does not impact on the design of the shield and which also results in having an optimal visual field at the same time. Another object is to provide a three-wheeled motorcycle which is reliable and easy to manufacture at competitive costs.

The Applicant has found that the task and objects listed above can be achieved by positioning the radar device, released from the shield, in the space between the front wheels, considering the motorcycle with straight wheels. Advantageously, in this space it is possible to obtain greater radar shielding with a field of vision comparable to that of positioning on the shield. Furthermore, due to the greater space available, the radar device can have larger dimensions than those allowed by positioning on the shield.

In particular, the task and objects are achieved through a three-wheeled saddle-ride motorcycle comprising two steerable and rolling front wheels and at least one driving rear wheel, wherein said motorcycle further comprises a main frame which supports a power assembly, wherein said frame includes a frame front part which configures a steering tube. The motorcycle according to the invention also comprises a rolling articulated quadrilateral connected to the frame front part; the quadrilateral supports the front wheels allowing them to roll.

The motorcycle further includes a suspension assembly interposed between the front wheels and the rolling articulated quadrilateral to allow an up and down movement of the front wheels with respect to the rolling articulated quadrilateral. The motorcycle also comprises a steering assembly configured to steer the front wheels and a front shield connected, directly or indirectly, to said frame front part or to said articulated quadrilateral.

The motorcycle according to the invention is characterised in that it comprises a radar device independent of the front shield and arranged between the front wheels, considering the motorcycle from a frontal observation point. Furthermore, the radar device is below a plane tangent the front wheels above, considering the motorcycle in a condition with straight wheels.

According to an embodiment, the rolling articulated quadrilateral comprises a lower cross member and an upper cross member hinged to said frame front part so as to oscillate around first rolling axes parallel to each other and substantially lying on a centreline longitudinal plane of the motorcycle. In this embodiment, the radar device is connected to at least one of said cross members.

According to a preferred embodiment, the radar device is arranged in a longitudinal position between a first vertical plane tangent to the front wheels in front and a second vertical plane tangent to the front wheels in the rear, wherein the motorcycle is considered to be in a straight-wheels condition.

According to a preferred embodiment, the radar device is arranged at a centreline longitudinal plane of the motorcycle.

According to a possible embodiment, the radar device is connected to the frame front part and follows the rolling movements of said main frame.

According to another embodiment, the radar device is connected to said lower cross member so as not to follow the rolling movements of the main frame.

According to another possible embodiment, the radar device is connected to said lower cross member at the hinge axis between the same cross member and said frame front part so as not to follow the rolling movements of said main frame.

According to a further embodiment, the radar device is supported by means of a support quadrilateral, wherein the support quadrilateral comprises two connecting rods, a first one of which rotatable about said hinge axis and a second one hinged to the lower cross member at a point different from said hinge axis, and wherein both connecting rods are hinged, at different respective points, to the radar device.

According to a further embodiment, the radar device is arranged in a longitudinal position comprised between a distal portion of the front shield and a front radiator.

### LIST OF FIGURES

Further features and advantages of the invention will become clearer from the examination of the following detailed description of some preferred, but not exclusive, embodiments of the motorcycle, illustrated by way of non-limiting example, with the aid of the appended drawings, in which:
- Figure 1 is a side view of a three-wheeled rolling motorcycle according to the present invention;
- Figures 2 and 3 are front views of the motorcycle of Figure 1 respectively in the absence and in the presence of roll;
- Figures 4 and 5 are front views of the motorcycle of Figure 1 without the protective shield respectively in the condition of Figure 2 and in the condition of Figure 3;
- Figure 6 is a schematic view relating to a possible embodiment of a motorcycle according to the present invention in a configuration with straight wheels;
- Figure 6B is a schematic view relating to the embodiment of Figure 6 in which the motorcycle is in a rolled configuration;
- Figures 7 and 7B are schematic views relating to another possible embodiment of a motorcycle according to the present invention;
- Figures 8 and 8B are schematic views relating to a further embodiment of a motorcycle according to the present invention.

The same reference numerals and letters in the figures identify the same elements or components.

### DETAILED DESCRIPTION

With reference to the cited figures, the present invention therefore relates to a three-wheel saddle-ride motorcycle, having two front steerable wheels 4, 4' and a rear drive wheel 9. In the continuation of the description, the saddle-ride motorcycle will be indicated generically with the expression motorcycle 1.

For the purposes of the invention, the expression "*longitudinal direction*" or "*front-rear direction*" means a direction parallel to the forward direction of the motorcycle 1 and orthogonal to the axis of rotation of the drive wheel, while the expression "transverse direction" or "right-left" direction indicates a direction orthogonal to the longitudinal direction, therefore parallel to the axis of rotation of the drive wheel.

The expression "*normal direction*" or "*up-down*" direction indicates a direction orthogonal to the longitudinal direction and to the transverse direction. The figures include Cartesian reference axes indicating the front-back direction F-B, the up-down direction U-D and the right-left direction R-L defined above.

Therefore, the terms "longitudinally or longitudinal" , the terms "transversely or transversely" and the terms "normally or normal" refer respectively to the longitudinal direction, i.e. front-back F-B, to the transverse direction, i.e. right-left R-L, and to the normal direction, i.e. up-down U-D. The terms "anteriorly", "left" and "above" refer to the lines indicated by the arrows of the half-lines F, L and U visible in the figures. The terms "*posteriorly*" (or "*behind*"), "*right*" and "*inferiorly*" instead indicate opposite lines to those indicated by the arrows of the half-lines B, R and D.

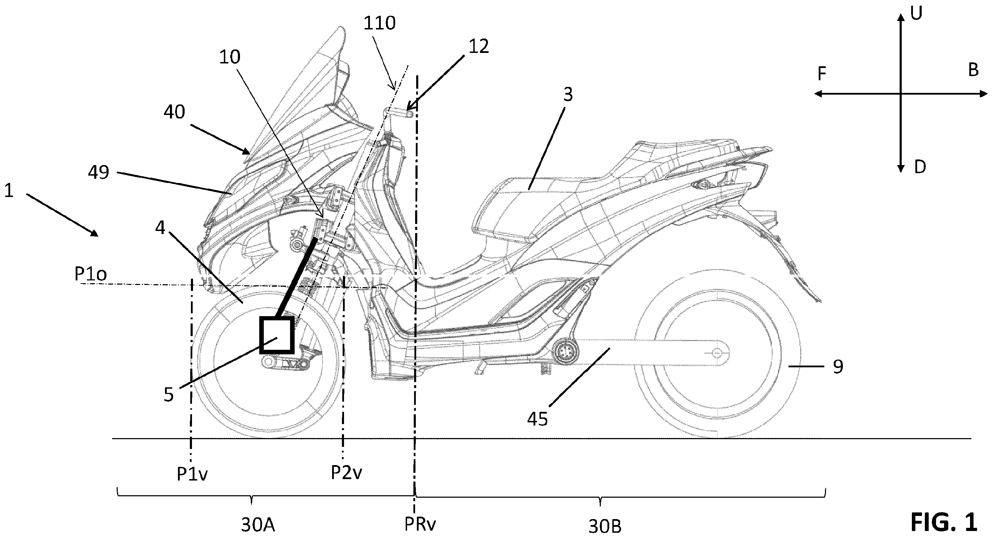

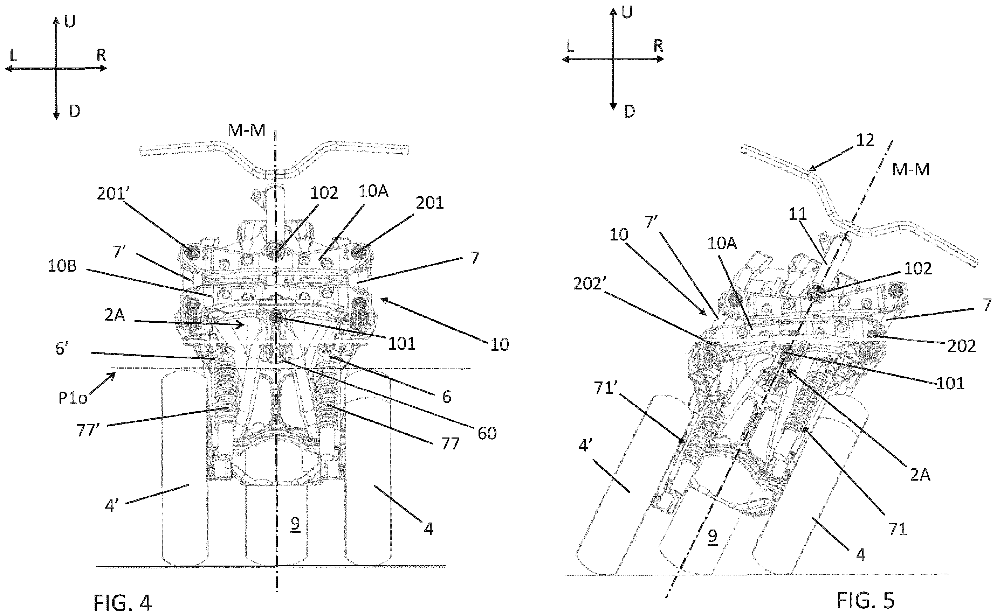

The expression centreline longitudinal plane M-M (indicated in Figures 4-5) is intended to indicate a plane containing the longitudinal parallel to the longitudinal direction F-B and containing the steering axis 110 (indicated in Figure 1) of the motorcycle 1. The expression longitudinal section plane means a section plane coinciding with the centreline longitudinal plane M-M.

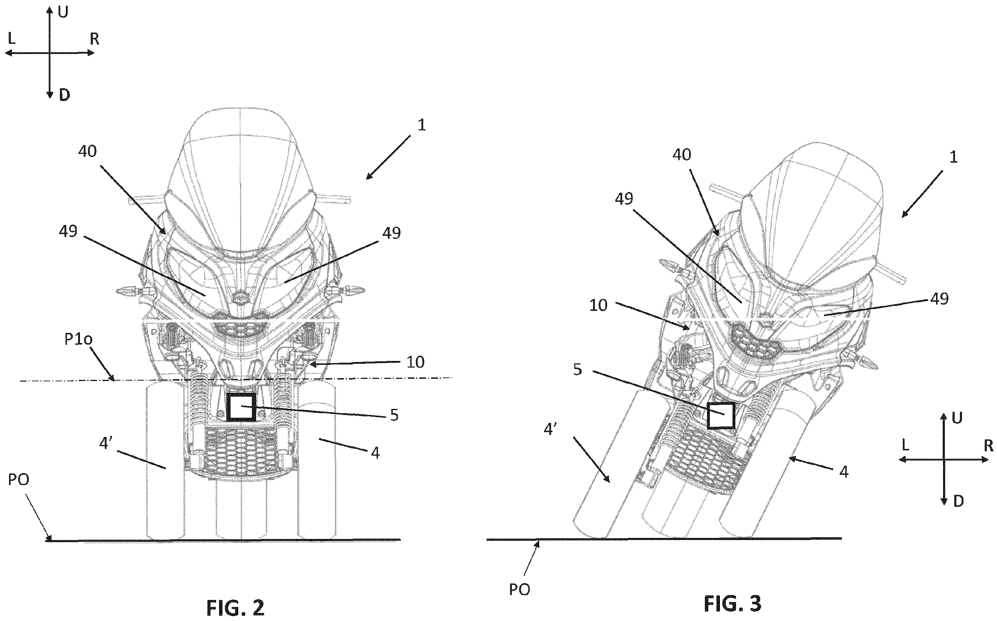

For the purposes of the invention, the expression "*motorcycle with straight wheels*" is intended to indicate a condition such that the wheels of the motorcycle are vertical in an unsteered condition, i.e. such that the centreline longitudinal plane is substantially vertical. The motorcycle condition with straight wheels can be seen in Figures 2 and 4. In this condition it is also assumed that the suspension assembly is an extended configuration.

The motorcycle 1 according to the invention comprises a main frame 2A-2B which extends mainly along the front-rear direction F-B. The main frame 2A-2B includes a frame front part 2A and a frame rear part 2B (not shown) which respectively support the front end 30A and the rear end 30B of the motorcycle 1.

In particular, for the purposes of the invention, the term "front end" indicates the part of the motorcycle 1 in front of a reference plane PRv passing through the rearmost point of the handlebar 12 of the motorcycle 1, i.e. through the point of the handlebar 12 closer to the rear wheel 9. The term "*rear end*" instead intends to indicate the part of the motorcycle 1 rearward to this reference plane PRv.

The rear part 30B of the main frame 2 supports the saddle 3 of the motorcycle 1 and a power assembly (not shown) designed to generate the driving force useful for running the motorcycle 1. Said rear part of frame 30B supports, through a swingarm 45, said rear driving wheel 9.

The frame front part 2A comprises a steering tube 11 in which a handlebar 12 is installed which rotates around a steering axis 110 configured by the same steering tube 11. A rolling articulated quadrilateral 10 (hereinafter quadrilateral 10) which supports the two front wheels 4,4' of the motorcycle 1 is connected to the frame front part 2A. The quadrilateral 10 has a per se known configuration and includes an upper cross member 10A and a lower cross member 10B centrally hinged to the frame front part 2A so as to rotate around corresponding longitudinal rolling axes 101, 102 (or hinge axes 101, 102) parallel to each other and lying on the centreline longitudinal plane M-M. The quadrilateral 10 also comprises a right upright 7 and a left upright 7' each hinged to the upper cross member 10A, so as to rotate around an upper rolling axis 201, 201', and to the lower cross member 10B so as to rotate around a lower roll axis 202, 202'. The two cross members 10A, 10B extend in the transversal direction R-L so as to be symmetrical with respect to the centreline longitudinal plane M-M. Therefore, the upper rolling axes 201, 201', as well as the lower rolling axes 202, 202', are substantially symmetrical with respect to the centreline longitudinal plane M-M. The movement of the two cross members 10A, 10B with respect to the frame front part 2A determines the deformation of the quadrilateral 10 which occurs substantially on a transversal plane, i.e. parallel to the transversal direction R-L.

A support element 6, 6' which supports, directly or indirectly, a corresponding front wheel 4, 4' is associated with each of the uprights 7, 7' of the quadrilateral 10. The support elements 6, 6' are free to rotate with respect to the corresponding upright 7, 7' so as to allow the steering movement of the front wheels 4, 4'. The term indirectly is meant to indicate a condition whereby other components are arranged between an upright 7, 7' and the corresponding front wheel 4, 4' which, together with the upright 7, 7', support the wheel itself.

The motorcycle 1 further comprises a suspension assembly 70 interposed between the front wheels 4, 4' and the articulated quadrilateral 10, to allow an up and down movement of the wheels themselves with respect to the articulated quadrilateral 10. The suspension assembly 70 comprises first suspension means 77 and second suspension means 77' respectively associated with a right front wheel 4 and with a left front wheel 4'. The expression "*operatively associated*" is intended to mean a condition whereby the first suspension means 77 and the second suspension means 77' are interposed between the corresponding front wheel 4, 4' and the corresponding upright 7, 7' to allow the lifting and lowering of the wheel itself.

In the front part 30A of the motorcycle 1 there is also arranged a steering assembly 60 for controlling the steering of the front wheels 4, 4'. The steering assembly 60 acts on the two support elements 6, 6' causing the rotation thereof with respect to the corresponding uprights 7, 7' of the quadrilateral 10. The steering assembly 60 is activated by the rotation of the aforementioned handlebar of the motorcycle 1 which, as indicated, is also part of the front end 30A.

In the front part 30A of the motorcycle 1 there is also provided a front protection shield 40 which supports one or more headlights 49 to illuminate the roadway while the motorcycle is in motion. With reference to Figures 2 and 3, the front shield 40 can be connected to the frame front part 2A so as to follow the rolling movements of the main frame 2A-2B. Alternatively, the shield 40 can be connected to the quadrilateral, in particular to one of the two cross members 10A, 10B of the articulated quadrilateral 10 according to a solution described in application IT102021000015341 in the name of the Applicant.

The motorcycle 1 according to the present invention is characterized in that it comprises a radar device 5 arranged in the space between the front wheels 40 and below a reference plane P1₀ tangent above the same front wheels 4'. For the purposes of the present invention, the position of the radar device 5 just defined is evaluated in the condition of motorcycle 1 with straight wheels defined above.

The term "*released*" is intended to indicate a condition whereby the radar device 5 is not installed on the shield 40 and therefore is not integral with it, i.e. it is not mounted on board the front shield 40.

With reference to Figure 1, preferably the radar device 5 is arranged in a longitudinal position between a first vertical plane P1ᵥ tangent to said front wheels 4, 4' in front and a second vertical plane P2ᵥ tangent to the same front wheels 4, 4' in the rear, wherein such longitudinal position is considered to be with the motorcycle 1 with straight wheels.

Again with reference to Figure 1, the front shield 40 comprises a distal portion 41 with respect to the steering tube 11. Basically, the front shield 40 extends longitudinally, and forwardly, starting from the steering tube 11 so as to be superimposed on the front wheels 4, 4'. For the purposes of the invention, the expression distal portion 41 of the front shield 40 means the portion most spaced out in the longitudinal direction (direction F-B) from the steering tube 11. This distal portion 41 comprises a lower end 41B, i.e. the lowest end (closest to the ground) always in a straight-wheeled vehicle condition.

According to a preferred embodiment, the radar device 5 is arranged in a longitudinal position between said distal portion 41 of the front shield 40 and a front radiator 66 connected to the main frame 2A-2B in a longitudinal position rear to the front wheels 4, 4'.

Furthermore, in a front view, the radar device 5 is arranged in the space between the lower end 41B of the distal portion 41, and the front radiator 66 (Figures 2 and 3). Advantageously, in this position the front view of the radar device 5 is always free in any driving condition of the motorcycle 1, both while the latter is traveling along a straight line (Figure 2), and when it is traveling around a bend (Figure 3), i.e. rolling and/or steering.

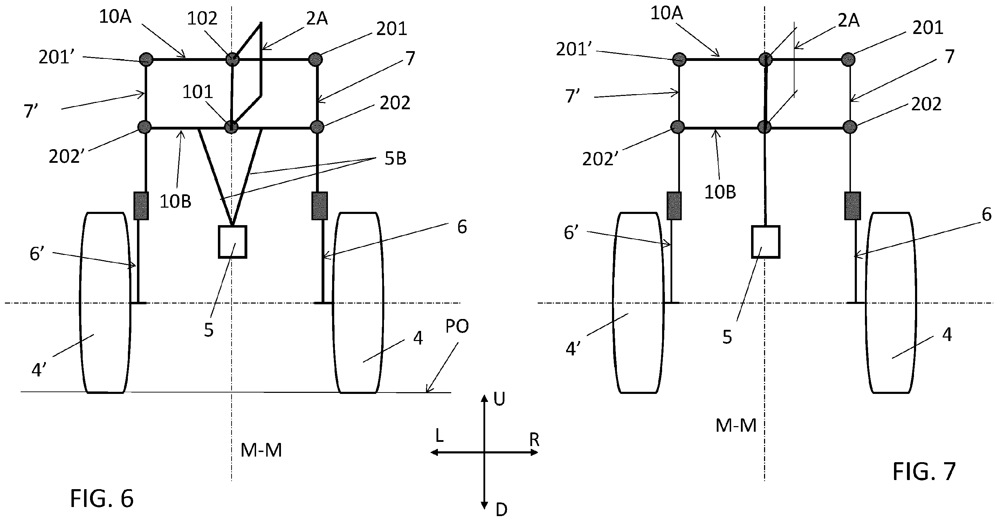

Figures 6 to 8 are schematic views which refer to possible embodiments of a motorcycle 1 according to the invention. In particular, each of these figures schematically represents a possible support mode for the radar device 5 in the space between the front wheels 4, 4' defined above.

With reference to Figure 6, according to a possible embodiment, the radar device 5 is connected to one of the two cross members 10A, 10B of the articulated quadrilateral 10, preferably to the lower cross member 10B. Preferably, the radar device 5 is rigidly connected to the lower cross member 10B so as to follow the movements thereof. In particular, in this embodiment, the radar device 5 is not subject to any rolling movement, as shown in Figure 6B. In fact, due to the kinematics of the quadrilateral 10, like the two cross members 10A, 10B, the radar device 5 also maintains the same orientation (substantially horizontal) with respect to a support plane PO of the motorcycle 1, lowering or raising itself (i.e. approaching or moving away from said support plane PO) with the cross member (10A or 10B) to which it is rigidly connected.

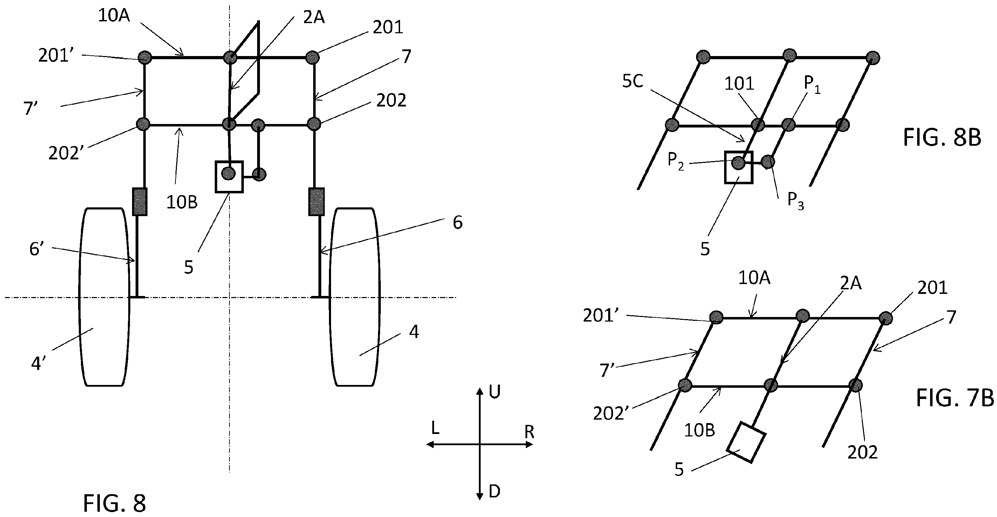

The radar device 5 can be connected to the cross members 10B through one or more support brackets 5B as schematized in Figures 6 and 6B. In particular, the support bracket or brackets will be configured in such a way that the radar device 5 is operatively located in a central position, i.e. at the centreline plane M-M, considering the motorcycle 1 with straight wheels. With reference to Figures 7 and 7B, according to another embodiment, the radar device 5 is connected to the frame front part 2A so as to remain integral with it. Therefore, the radar device 5 follows the frame front part 2A during its roll (see in particular Figure 7B).

Also in this case, a support bracket 5B may be provided to connect the radar device 5 to the frame front part 2A, so that the radar device 5 is positioned at the centreline plane M-M. Alternatively, the radar device 5 can be installed directly on the frame front part 2A by suitably shaping the latter.

With reference to Figures 8 and 8B, according to a further embodiment, the radar device 5 is connected to one of said cross members 10B at the hinge axis 101 configured between the same cross member 10B and said frame front part 2A. In practice, also in this embodiment the radar device 5 is released from the frame 2A-2B of the motorcycle 1 and therefore is not subjected to rolling movements.

In the possible embodiment shown in Figures 8 and 8B, the radar device 5 is supported by a support quadrilateral 5C.

In particular, the support quadrilateral 5C comprises two connecting rods 51, 52, a first (51) of which rotates around the hinge axis 101 and a second (52) hinged to the lower cross member 10B at a point P₁ different from the hinge axis 101. Both connecting rods 51, 52 are then hinged, at different points (P₂ and P₃, respectively) to the radar device 5 so as to define a quadrilateral configuration such that the hinge points (101, P₂) of the first connecting rod 51 lie on a straight line parallel to that on which the hinge points (P₁, P₃) of the second connecting rod 52 lie.

As apparent from Figure 8B, during the deformation of the articulated quadrilateral 10, caused by the roll of the motorcycle 1, the radar device 5 does not change its orientation with respect to the support plane PO of the motorcycle 1, similarly to what occurs for the cross members 10A, 10B.

The motorcycle 1 according to the invention allows the intended tasks and purposes to be fully accomplished. Advantageously, the position between the front wheels 4, foreseen for the radar device 5, does not impact on the configuration of the shield and therefore on its design. Furthermore, it becomes possible to use a radar device of larger dimensions than those normally employed in these motor vehicles. Furthermore, this position allows better shielding of the radar device and therefore improves its efficiency.

A further advantage is that the radar device 5 has a frontal visual field that is always free in any rolling and/or steering configuration assumed by the front wheels while the motorcycle is running. This aspect optimizes the detection of the radar device itself, which is not shielded, not even partially, by any component of the front end of the motorcycle.

## Claims

1. A saddle-ride type motorcycle (1) comprising two front wheels (4, 4') and at least one rear wheel, wherein said motorcycle (1) further comprises:
- a main frame (2A-2B) supporting a power assembly, said frame (2A-2B) comprising a frame front part (2A);
- a rolling articulated quadrilateral (10) connected to said frame front part (2A), wherein said rolling articulated quadrilateral (10) supports a first front wheel (4) and a second front wheel (4') allowing said first front wheel (4) and said second front wheel (4') a rolling movement;
- a steering assembly (60) pivotably connected to said frame front part (2A), for controlling the steering of said front wheels (4, 4');
- a suspension assembly (71, 71') interposed between said front wheels (4, 4') and said rolling articulated quadrilateral (10), to allow an up and down movement of said front wheels (4, 4') with respect to said rolling articulated quadrilateral (10),
- a front shield (40) connected, directly or indirectly, to said frame front part (2A) or to said rolling articulated quadrilateral (10),
**characterised in that** it comprises a radar device (5) freed from said front shield (40) and placed between said front wheels (4, 4'), when said motorcycle (1) is considered from a front observation point, and below a plane (P1o) that is tangent said front wheels (4) above, when said motorcycle (1) is considered in a straight-wheels condition.

2. Motorcycle (1) according to claim 1, wherein said rolling articulated quadrilateral (10) comprises a lower cross member (10B) and an upper cross member (10A) hinged to said frame (2A-2B) so as to oscillate about first rolling axes (101, 102) parallel to each other and substantially lying on a centreline longitudinal plane (M-M) of said motorcycle (1), wherein said radar device (5) is connected to at least one of said cross members (10A, 10B).

3. Motorcycle (1) according to claim 1 or 2, wherein said radar device (5) is arranged in a longitudinal position between a first vertical plane (P1v) tangent to said front wheels (4, 4') in front and a second vertical plane (P2v) tangent to said front wheels (4, 4') in the rear, wherein said motorcycle (1) is considered to be in a straight-wheels condition.

4. Motorcycle (1) according to any of the claims 1-3, wherein said radar device (5) is arranged at a centreline longitudinal plane (M-M) of said motorcycle (1).

5. Motorcycle (1) according to any one of the preceding claims, wherein said radar device (5) is connected to said frame front part (2A) and follows the rolling movements of said main frame (2A-2B).

6. Motorcycle (1) according to any one of claims 1 to 4, and wherein said radar device (5) is connected to said lower cross member (10B) so as not to follow the rolling movements of said main frame (2A-2B).

7. Motorcycle (1) according to claim 6, wherein said radar device (5) is connected to said lower cross member (10B) at the hinge axis (101) between said lower cross member (10B) and said frame front part (2A) so as not to follow the rolling movements of said main frame (2A-2B).

8. Motorcycle (1) according to claim 7, wherein said radar device (5) is supported by means of a support quadrilateral (5C), wherein the support quadrilateral (5C) comprises two connecting rods (51, 52), a first one (51) of which rotatable about said hinge axis (101) and a second one (52) hinged to the lower cross member (10B) at a point (P1) different from said hinge axis (101), and wherein both connecting rods (51, 52) are hinged, at different respective points (P₂ and P₃), to the radar device (5).

9. Motorcycle (1) according to any one of said claims 1 to 8, wherein said radar device (5) is arranged in a position between a distal portion (41) of said front shield (40) and a front radiator (66).

## Patentansprüche

1. Motorrad vom Sattelfahrtyp (1), das zwei Vorderräder (4, 4') und mindestens ein Hinterrad umfasst, wobei das Motorrad (1) ferner umfasst:
- einen Hauptrahmen (2A-2B), der eine Antriebseinheit trägt, wobei der Rahmen (2A-2B) einen Rahmenvorderteil (2A) umfasst;
- ein rollendes Gelenkviereck (10), das mit dem Rahmenvorderteil (2A) verbunden ist, wobei das rollende Gelenkviereck (10) ein erstes Vorderrad (4) und ein zweites Vorderrad (4') trägt, wodurch dem ersten Vorderrad (4) und dem zweiten Vorderrad (4') eine Rollbewegung ermöglicht wird;
- eine Lenkanordnung (60), die schwenkbar mit dem Rahmenvorderteil (2A) verbunden ist, um die Lenkung der Vorderräder (4, 4') zu steuern;
- eine Aufhängungsanordnung (71, 71'), die zwischen den Vorderrädern (4, 4') und dem rollenden Gelenkviereck (10) angeordnet ist, um eine Auf- und Abbewegung der Vorderräder (4, 4') in Bezug auf das rollende Gelenkviereck (10) zu ermöglichen,
- eine Frontabdeckung (40), die direkt oder indirekt mit dem Rahmenvorderteil (2A) oder dem rollenden Gelenkviereck (10) verbunden ist,
**dadurch gekennzeichnet, dass** es ein Radargerät (5) umfasst, das von der Frontabdeckung (40) getrennt ist und zwischen den Vorderrädern (4, 4'), wenn das Motorrad (1) von einem vorderen Beobachtungspunkt aus betrachtet wird, und unterhalb einer Ebene (P1o) angebracht ist, die tangential zu den Vorderrädern (4) oberhalb ist, wenn das Motorrad (1) in einem Zustand mit geraden Rädern betrachtet wird.

2. Motorrad (1) nach Anspruch 1, wobei das rollende Gelenkviereck (10) einen unteren Querträger (10B) und einen oberen Querträger (10A) umfasst, die an dem Rahmen (2A-2B) angelenkt sind, um um erste Rollachsen (101, 102) zu schwingen, die parallel zueinander verlaufen und im Wesentlichen auf einer Längsmittelebene (M-M) des Motorrads (1) liegen, wobei das Radargerät (5) mit mindestens einem der Querträger (10A, 10B) verbunden ist.

3. Motorrad (1) nach Anspruch 1 oder 2, wobei das Radargerät (5) in einer Längsposition zwischen einer ersten vertikalen Ebene (P1v), die vorne tangential zu den Vorderrädern (4, 4') ist, und einer zweiten vertikalen Ebene (P2v), die hinten tangential zu den Vorderrädern (4, 4') ist, angeordnet ist, wobei das Motorrad (1) in einem Zustand mit geraden Rädern betrachtet wird.

4. Motorrad (1) nach einem der Ansprüche 1-3, wobei das Radargerät (5) in einer Längsmittelebene (M-M) des Motorrads (1) angeordnet ist.

5. Motorrad (1) nach einem der vorhergehenden Ansprüche, wobei das Radargerät (5) mit dem Rahmenvorderteil (2A) verbunden ist und den Rollbewegungen des Hauptrahmens (2A-2B) folgt.

6. Motorrad (1) nach einem der Ansprüche 1 bis 4, und wobei das Radargerät (5) mit dem unteren Querträger (10B) verbunden ist, um den Rollbewegungen des Hauptrahmens (2A-2B) nicht zu folgen.

7. Motorrad (1) nach Anspruch 6, wobei das Radargerät (5) mit dem unteren Querträger (10B) an der Gelenkachse (101) zwischen dem unteren Querträger (10B) und dem Rahmenvorderteil (2A) verbunden ist, um den Rollbewegungen des Hauptrahmens (2A-2B) nicht zu folgen.

8. Motorrad (1) nach Anspruch 7, wobei das Radargerät (5) mittels eines Trägervierecks (5C) getragen wird, wobei das Trägerviereck (5C) zwei Verbindungsstangen (51, 52) umfasst, von denen eine erste (51) um die Gelenkachse (101) drehbar ist und eine zweite (52) an einem von der Gelenkachse (101) unterschiedlichen Punkt (P1) an dem unteren Querträger (10B) angelenkt ist, und wobei beide Verbindungsstangen (51, 52) an jeweils unterschiedlichen Punkten (P₂ und P₃) an dem Radargerät (5) angelenkt sind.

9. Motorrad (1) nach einem der Ansprüche 1 bis 8, wobei das Radargerät (5) in einer Position zwischen einem distalen Abschnitt (41) der Frontabdeckung (40) und einem Frontkühler (66) angeordnet ist.

## Revendications

1. Motocyclette du type monté à califourchon (1) comprenant deux roues avant (4, 4') et au moins une roue arrière, dans laquelle ladite motocyclette (1) comprend en outre :
- un châssis principal (2A-2B) supportant un ensemble de puissance, ledit châssis (2A-2B) comprenant une partie avant de châssis (2A) ;
- un quadrilatère articulé roulant (10) relié à ladite partie avant de châssis (2A), dans laquelle ledit quadrilatère articulé roulant (10) supporte une première roue avant (4) et une deuxième roue avant (4') permettant à ladite première roue avant (4) et ladite deuxième roue avant (4') un mouvement de roulement ;
- un ensemble de direction (60) relié pivotant à ladite partie avant de châssis (2A), pour commander la direction desdites roues avant (4, 4') ;
- un ensemble de suspension (71, 71') interposé entre lesdites roues avant (4, 4') et ledit quadrilatère articulé roulant (10), pour permettre un mouvement vers le haut et vers le bas desdites roues avant (4, 4') par rapport audit quadrilatère articulé roulant (10),
- un bouclier avant (40) relié, directement ou indirectement, à ladite partie avant de châssis (2A) ou audit quadrilatère articulé roulant (10),
**caractérisée en ce qu'**elle comprend un dispositif radar (5) libéré dudit bouclier avant (40) et placé entre lesdites roues avant (4, 4'), lorsque ladite motocyclette (1) est considérée à partir d'un point d'observation avant, et en dessous d'un plan (P1o) qui est tangent auxdites roues avant (4) au-dessus, lorsque ladite motocyclette (1) est considérée dans un état de roues droites.

2. Motocyclette (1) selon la revendication 1, dans laquelle ledit quadrilatère articulé roulant (10) comprend une traverse inférieure (10B) et une traverse supérieure (10A) articulées sur ledit châssis (2A-2B) de manière à osciller autour de premiers axes de roulement (101, 102) parallèles l'un à l'autre et situés sensiblement sur un plan longitudinal d'axe central (M-M) de ladite motocyclette (1), dans laquelle ledit dispositif radar (5) est relié à au moins l'une desdites traverses (10A, 10B).

3. Motocyclette (1) selon la revendication 1 ou 2, dans laquelle ledit dispositif radar (5) est disposé dans une position longitudinale entre un premier plan vertical (P1v) tangent auxdites roues avant (4, 4') à l'avant et un deuxième plan vertical (P2v) tangent auxdites roues avant (4, 4') à l'arrière, dans laquelle ladite motocyclette (1) est considérée comme étant dans un état de roues droites.

4. Motocyclette (1) selon l'une quelconque des revendications 1 à 3, dans laquelle ledit dispositif radar (5) est disposé au niveau d'un plan longitudinal d'axe central (M-M) de ladite motocyclette (1).

5. Motocyclette (1) selon l'une quelconque des revendications précédentes, dans laquelle ledit dispositif radar (5) est relié à ladite partie avant de châssis (2A) et suit les mouvements de roulement dudit châssis principal (2A-2B).

6. Motocyclette (1) selon l'une quelconque des revendications 1 à 4, et dans laquelle ledit dispositif radar (5) est relié à ladite traverse inférieure (10B) de manière à ne pas suivre les mouvements de roulement dudit châssis principal (2A-2B).

7. Motocyclette (1) selon la revendication 6, dans laquelle ledit dispositif radar (5) est relié à ladite traverse inférieure (10B) au niveau de l'axe d'articulation (101) entre ladite traverse inférieure (10B) et ladite partie avant de châssis (2A) de manière à ne pas suivre les mouvements de roulement dudit châssis principal (2A-2B).

8. Motocyclette (1) selon la revendication 7, dans laquelle ledit dispositif radar (5) est supporté au moyen d'un quadrilatère de support (5C), dans laquelle le quadrilatère de support (5C) comprend deux bielles (51, 52), dont une première (51) peut tourner autour dudit axe d'articulation (101) et une deuxième (52) est articulée à la traverse inférieure (10B) en un point (P1) différent dudit axe d'articulation (101), et dans laquelle les deux bielles (51, 52) sont articulées, en des points respectifs différents (P₂ et P₃), au dispositif radar (5).

9. Motocyclette (1) selon l'une quelconque des revendications 1 à 8, dans laquelle ledit dispositif radar (5) est disposé dans une position entre une partie distale (41) dudit bouclier avant (40) et un radiateur avant (66).
